Europäisches Patentamt

European Patent Office

Office européen des brevets

(19)

(11) **EP 1 652 699 A1**

(12) **EUROPÄISCHE PATENTANMELDUNG**

(43) Veröffentlichungstag:
**03.05.2006 Patentblatt 2006/18**

(21) Anmeldenummer: 05023452.5

(22) Anmeldetag: **27.10.2005**

(51) Int Cl.:
*B60G 11/30* (2006.01)   *B60G 17/04* (2006.01)
*B60G 17/052* (2006.01)   *F16F 9/04* (2006.01)
*F16K 31/06* (2006.01)

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **28.10.2004   DE 102004052500**

(71) Anmelder: **Voss Automotive GmbH**
**51688 Wipperfürth (DE)**

(72) Erfinder:
• **Borgmeier, Olav, Dipl.-Ing.**
**42499 Hückeswagen (DE)**
• **Terlau, Norbert, Dipl.-Ing.**
**51515 Kürten (DE)**
• **Sager, Martin, Dipl.-Ing.**
**52064 Aachen (DE)**

(74) Vertreter: **Patentanwälte**
**Dr. Solf & Zapf**
**Schlossbleiche 20**
**42103 Wuppertal (DE)**

(54) **Anbausatz für ein Fahrzeug-Luftfedersystem mit einem zuschaltbaren Zusatz-Luftfedervolumen, Schalteinrichtung für einen solchen Anbausatz und Verfahren zur Steuerung des Luftfedersystems**

(57)     Die Erfindung betrifft einen Anbausatz (1) für ein Fahrzeug-Luftfedersystem, bestehend aus einem Zusatz-Luftfedervolumen (2) mit einer an ein Fahrzeug-Haupt-Luftfedervolumen (4) anschließbaren eine Luftmasse ($m_{Luft}$) enthaltenden Verbindungsleitung (6) und einer Schalteinrichtung (8) zum wahlweisen Zu- oder Abschalten des Zusatz-Luftfedervolumens (2), wobei die Schalteinrichtung (8) im Bereich der Verbindungsleitung (6) derart angeordnet und ausgebildet ist, daß sie den Querschnitt ($A_L$) der Verbindungsleitung (6) einerseits in einer Öffnungsstellung nahezu vollständig für eine Durchströmung in beiden Richtungen freigibt und andererseits in einer Sperrstellung bis auf einen bestimmten Restöffnungsquerschnitt ($A_R$) reduziert. Zur Verbesserung des Dämpfungsverhaltens des Systems wird vorgeschlagen, daß der Restöffnungsquerschnitt ($A_R$) derart dimensioniert ist, daß die Luftmasse ($m_{Luft}$) in der Verbindungsleitung (6) bei auftretenden Erregerfrequenzen ($\omega_0$) im Bereich von >0 bis 10 Hz eine gedämpfte Schwingung unterhalb ihrer Helmholtz-Eigenfrequenz ($\omega_{eHH}$) ausführt.

Fig.1

EP 1 652 699 A1

**Beschreibung**

Die vorliegende Erfindung betrifft einen Anbausatz für ein Fahrzeug-Luftfedersystem, bestehend aus einem Zusatz-Luftfedervolumen mit einer an ein Fahrzeug-Haupt-Luftfedervolumen anschließbaren Verbindungsleitung und einer Schalteinrichtung zum wahlweisen Zu- oder Abschalten des Zusatz-Luftfedervolumens, wobei die Schalteinrichtung im Bereich der Verbindungsleitung derart angeordnet und ausgebildet ist, daß sie den Querschnitt der Verbindungsleitung einerseits in einer Öffnungsstellung nahezu vollständig für eine Durchströmung in beiden Richtungen freigibt und andererseits in einer Sperrstellung bis auf einen bestimmten Restöffnungsquerschnitt reduziert. Die Erfindung betrifft auch eine Schalteinrichtung für einen solchen Anbausatz und des Weiteren ein Verfahren zur Steuerung eines solchen Luftfedersystems.

Aus der EP 0 193 851 A2/B1 und der parallelen US 4 712 775 ist ein Stoßdämpfer bzw. Luftfederbein bekannt, welches zusätzlich zu einer Hauptluftkammer eine Hilfsluftkammer aufweist. Zwischen diesen beiden im oberen Endbereich des Dämpfers integriert angeordneten Luftkammern ist zudem ein Steuerventil integriert, welches mechanisch durch ein Betätigungsorgan (Aktuator) betätigbar ist, um die Hilfsluftkammer mit der Hauptluftkammer zu verbinden oder von dieser abzutrennen. Eine solche integrierte Ausführung führt zu einer großen Bauform, was in heutigen. Fahrzeugen häufig zu Platzproblemen führt. Außerdem ist das Steuerventil aufgrund von Dichtungsmitteln und aufgrund des separaten Betätigungsorgans aufwändig.

Die DE 100 17 030 A beschreibt ein spezielles Magnetventil, bei dem in Endlagen eines Magnetankers wirksame Dämpfungsmittel vorgesehen sind, die ein hartes Anschlagen des Ankers und der korrespondierenden Dichtungsmittel aneinander verhindern sollen. Dadurch soll es möglich sein, in Luftfedersystemen von PKW's ein Komfortvolumen in Abhängigkeit von der Fahrdynamik zum Erreichen einer härteren Federrate weitestgehend geräuschlos abzuschalten. Dieses Ventil ist jedoch ebenfalls sehr kompliziert und aufwändig aufgebaut.

Um die genannten Nachteile zu überwinden, wurde in der EP 1 457 722 A1 ein Anbausatz der eingangs beschriebenen Art beschrieben, bei dem unter Ausnutzung des sogenannten Helmholtz-Effektes in einem bestimmten, in der Praxis zu erwartenden Bereich einer Erregerfrequenz des schwingenden Luftvolumens ein Quasi-Verschluß der Verbindungsleitung erreicht wird. Der bekannte Anbausatz weist dabei eine Schalteinrichtung der gattungsgemäßen Art auf und in dem mit ihm gebildeten Luftfedersystem ist ein Verfahren der gattungsgemäßen Art realisierbar. Der Helmholtz-Effekt führt dazu, daß bei einem bestimmten reduzierten Durchlaß-Querschnitt oberhalb einer sogenannten Helmholtz-Eigenfrequenz der in der Verbindungsleitung schwingenden Luftsäule durch die Trägheit der Masse der Luft, das Zusatz-Luftfedervolumen quasi abgeschaltet wird. Dies gestattet vorteilhafterweise eine sehr einfache und damit preiswerte sowie robuste Ausführung der Schalteinrichtung, z.B. als eine in der Verbindungsleitung angeordnete, scheibenförmige Drosselklappe, die um eine Querachse drehbar gelagert und mit ihrer Scheibenfläche in der Öffnungsstellung in Längsrichtung der Verbindungsleitung und in der Sperrstellung in Querrichtung ausgerichtet ist, wobei der Restöffnungsquerschnitt in der Sperrstellung durch einen die Drosselklappe umschließenden Umfangsspalt gebildet ist.

Bei geöffneter Schalteinrichtung des bekannten Einbausatzes bewegt sich das Luftvolumen bzw. die Luftmasse innerhalb der Verbindungsleitung entsprechend einer eingangsseitigen Erregerfrequenz gegen das Volumen bzw. den Druck des Zusatzvolumens. Die Luftmasse in der Verbindungsleitung wirkt bei dieser Bewegung mit dem Zusatzvolumen zusammen, indem sie in der Verbindungsleitung auf der Luftfeder des Zusatzvolumens schwingt, wodurch eine insgesamt weiche, d.h. wenig dämpfende, Federcharakteristik eingestellt wird.

Für die Schließstellung der Schalteinrichtung des bekannten Einbausatzes wird - wie erwähnt - der Helmholtz-Effekt ausgenutzt, wobei die Helmholtz-Eigenfrequenz $\omega_{eHH}$ nach folgender Formel berechnet werden kann:

$$\omega_{eHH} = \sqrt{\frac{c_{ZV}}{m_{Luft}}} \qquad\qquad (1)$$

Darin sind $c_{ZV}$ die Federkonstante des Zusaizvolumens und $m_{Luft}$ die Masse der Luft in der Verbindungsleitung. Das System wird dabei als frei schwingendes Masse-FederSystem aufgefaßt.

Die Federkonstante $c_{ZV}$ des Zusatrvolumens wird dabei nach der Formel

$$C_{zv} = n * A_L^2 * \frac{P_{zv}}{V_{zv}} \qquad (2)$$

angesetzt. In dieser Formel sind n der sogenannte, im Bereich von 1,0 bis 1,4 liegende, die innere Luftreibung kennzeichnende Polytropenexponent, $P_{zv}$ und $V_{zv}$ der Druck und das Volumen des Zusatzvolumens und $A_L$ der Querschnitt der Verbindungsleitung, welcher nach der Formel

$$A_L = \frac{d^2 \pi}{4} \qquad (3)$$

berechnet werden kann, wobei d der Durchmesser der Verbindungsleitung ist. Die Masse $m_{Luft}$ der Luft in der Verbindungsleitung ergibt sich zu

$$m_{Luft} = A_L * l * \rho_{Luft} \qquad (4)$$

wobei I die Länge der Verbindungsleitung und $\rho_{Luft}$ die Dichte der Luft ist, die wiederum nach der Formel

$$\rho_{Luft} = \frac{P_{zv}}{R_{Luft} * T} \qquad (5)$$

berechnet werden kann, in der $R_{Luft}$ die Gaskonstante der Luft (etwa 287 J/kg K) und T die Temperatur in K sind.

Unter Berücksichtigung der Formeln (2) bis (5) ergibt sich aus Formel (1) die Helmholtz-Eigenfrequenz $\omega_{eHH}$ zu

$$\omega_{eHH} = d * \sqrt{\frac{n * \pi * R_{Luft} * T}{4 * V_{zv} * l}} \qquad (6)$$

Bei geschlossener Schalteinrichtung des bekannten Einbausatzes schwingt die Luftmasse in der Verbindungsleitung oberhalb dieser Eigenfrequenz $\omega_{eHH}$ im Gegentakt zur eingangsseitigen Erregerfrequenz $\omega_0$, wodurch es zu einer zusätzlichen Druckerhöhung im Haupt-Federvolumen und dadurch insgesamt zu einer Erhöhung der Federsteife kommt. Weit oberhalb der Eigenfrequenz schwingt die Masse nahezu gar nicht mehr, so daß das Zusatz-Luftfedervolumen praktisch abgesperrt ist.

In der Praxis wurde jedoch festgestellt, daß die Eigenschaften eines mit dem bekannten Anbausatz ausgestatteten Luftfedersystems noch nicht optimal sind. Beispielsweise erreicht dieses nicht die Leistungscharakteristik eines elektronisch geregelten Dämpfersystems, dessen Einsatz allerdings sehr aufwändig ist.

Der vorliegenden Erfindung liegt die Aufgabe zugrunde, einen Einbausatz sowie eine Schalteinrichtung und ein Verfahren der eingangs genannten Art zu schaffen, die einerseits eine wenig aufwändige und robuste Ausführung, insbesondere der Schalteinrichtung gewährleisten, mit denen aber andererseits hinsichtlich der in der Praxis erforderlichen Federeigenschaften eines mit dem Einbausatz ausgestatteten Systems Verbesserungen erzielt werden.

Erfindungsgemäß wird dies dadurch erreicht, daß der Restöffnungsquerschnitt derart dimensioniert ist, daß die Luftmasse in der Verbindungsleitung bei auftretenden Erregerfrequenzen im Bereich von 0 bis 10 Hz eine gedämpfte Schwingung unterhalb ihrer Helmholtz-Eigenfrequenz ausführt.

Der Vorteil einer solchen erfindungsgemäßen Dimensionierung des Einbausatzes besteht darin, daß dieser mit hoher Effizienz für das gesamte in der Praxis auftretende Anregungsspektrum der zu dämpfenden Erregerfrequenzen geeignet ist. So kann insbesondere auch bei Wankbewegungen eines Kraftfahrzeugs, wie sie bei Lenkvorgängen auftreten, die erwünschte Dämpfungscharakteristik der Schwingungen leicht eingestellt werden.

Durch die erfindungsgemäße Dimensionierung des Einbausatzes wird dabei vorteilhafterweise erreicht, daß - weder bei zu-, noch bei abgeschaltetem Zusatz-Luftfedervolumen der Helmholtz-Effekt, der je nach Anregungsfrequenz zu einer starken Amplitudenüberhöhung führen kann, zum Tragen kommt. Dennoch ist aber eine einfache Ausführung des erfindungsgemäßen Einbausatzes möglich, weil die gedämpfte Schwingung der Luftsäule in der Verbindungsleitung unterhalb der Helmholtz-Eigenfrequenz dadurch erreicht werden kann, daß die in der Öffnungsstellung bekanntermaßen ausschließlich als Überströmventil wirkende Schalteinrichtung in der Sperrstellung gewissermaßen als eine aus einem Überströmventil und einem Drosselorgan gebildete bauliche Einheit konzipiert ist, bei der der Querschnitt der Verbindungsleitung nicht vollständig verschlossen werden muß. Auf den Einsatz von diesem Zweck dienenden Dich-tungsmitteln kann daher verzichtet werden.

Ein vorteilhafter Wert der Dämpfung liegt in der Sperrstellung dabei dann vor, wenn die sich unter der Wirkung einer Erregergröße einstellende Amplitude der Schwingung, wie sie beispielsweise angeregt durch einen Lenkradeingabewinkel erzeugt wird, deutlich unterhalb einer Amplitude liegt, wie sie sich ohne das Vorhandensein der Schalteinrichtung bzw. bei Vorliegen der Öffnungsstellung der Schalteinrichtung einstellen würde. Als eine solche deutlich kleinere Amplitude wird dabei eine Amplitude angesehen, die kleiner oder gleich dem Mittelwert aus einer Amplitude bei Vorhandensein einer Luftfeder mit Zusatzvolumen und einer Amplitude bei Vorhandensein einer Luftfeder ohne Zusatzvolumen ist.

Zur parametrischen Beschreibung von pneumatischen Widerständen, wie sie in dem erfindungsgemäßen Anbausatz die Schalteinrichtung darstellt, wird oft auf das kritische Druckverhältnis und den pneumatischen Leitwert zurückgegriffen, deren Definitionen und praktische Ermittlung in der Norm ISO 6358 festgelegt sind. Das kritische Druckverhältnis bezeichnet das Verhältnis von Auslaß- zu Einlaßdruck, bei dem im engsten Querschnitt, im erfindungsgemäßen Fall im Restöffnungsquerschnitt der Schalteinrichtung, gerade Schallgeschwindigkeit erreicht wird. Der Leitwert ist ein Maß für den auf den technischen Normzustand der Luft bezogenen überkritischen Durchfluß, der keine Abhängigkeit mehr vom Verhältnis Auslaß- zu Einlaßdruck aufweist. Es wurde gefunden, daß der in der Sperrstellung bei Vorliegen des Restöffnungsquerschnitts gebildete pneumatische Widerstand der Schalteinrichtung des erfindungsgemäßen Anbausatzes insbesondere dann als optimal zu betrachten ist, wenn er ein kritisches Druckverhältnis im Bereich von 0,2 bis 0,45 und einen pneumatischen Leitwert im Bereich von > 1 bis < 77 Normliter je Minute und Bar aufweist.

Was das erfindungsgemäße Verfahren betrifft, so wird das der Erfindung zu Grunde liegende Problem dadurch gelöst, daß in der Sperrstellung der Restöffnungsquerschnitt derart eingestellt wird, daß die Luftmasse in der Verbindungsleitung bei auftretenden Erregerfrequenzen im Bereich von >0 bis 10 Hz eine gedämpfte Schwingung unterhalb ihrer Helmholtz-Eigenfrequenz ausführt. Der entsprechende Restöffungsquerschnitt muß demnach nicht eine konstruktiv vorgegebene Größe des Systems sein, sondern kann dynamisch eingestellt werden.

Weitere vorteilhafte Ausgestaltungsmerkmale der Erfindung sind in den Unteransprüchen sowie der folgenden Beschreibung enthalten.

Anhand von eines bevorzugten Ausführungsbeispiels soll im folgenden die Erfindung näher erläutert werden. Dabei zeigen:

Fig. 1      ein stark schematisches Prinzipbild eines Luftfedersystems zur Erläuterung seiner Wirkungsweise,

Fig. 2      ein mechanisches Ersatzschaltbild für den erfindungsgemäßen Anbausatz in Fig. 1,

Fig. 3a      ein Diagramm zur Erläuterung der Beanspruchung eines Luftfedersystems mit einem erfindungsgemäßen Anbausatz,

Fig. 3b      ein Diagramm zur Erläuterung des sogenannten Helmholtz-Effektes und des erfindungsgemäßen Schwingungsbereiches,

Fig. 4      ein Diagramm zur Erläuterung der Wirkung eines Luftfedersystems mit einem erfindungsgemäßen Anbausatz,

Fig.5      eine schematisierte Ansicht eines Teils einer Verbindungsleitung als Bestandteil eines erfindungsgemäßen Anbausatzes mit einer ersten Ausführung einer Schalteinrichtung,

Fig. 6      eine perspektivische Darstellung eines Teils einer Verbindungsleitung als Bestandteil eines erfindungsgemäßen Anbausatzes mit einer zweiten Ausführung einer Schalteinrichtung,

Fig. 7        einen axialen Schnitt durch den mittleren Bereich der in Fig. 6 dargestellten Ausführung,

Fig. 8        eine vergrößerte, im wesentlichen der in Fig. 7 dargestellten Ausführung entsprechende Darstellung eines Teils der Verbindungsleitung mit einer Schalteinrichtung gemäß ihrer zweiten Ausführung,

Fig. 9        eine Teilansicht in Richtung des Pfeils IX in Fig. 8,

Fig. 10      ein Diagramm zur Erläuterung der Bedeutung und Ermittlung der zur Charakterisierung eines erfindungsgemäßen Anbausatzes herangezogenen Kenngrößen.

In den verschiedenen Figuren der Zeichnung sind gleiche Teile stets mit den gleichen Bezugszeichen versehen und werden daher im folgenden in der Regel jeweils nur einmal beschrieben.

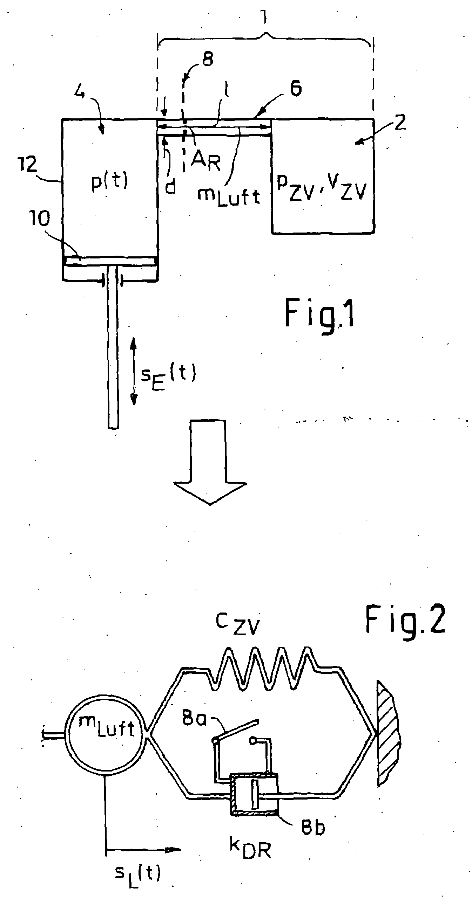

Wie sich zunächst aus Fig. 1 ergibt, besteht ein erfindungsgemäßer Anbausatz 1 aus einem Zusatz-Luftfedervolumen 2 mit einer an ein Haupt-Luftfedervolumen 4 anschließbaren Verbindungsleitung 6, in der eine in Fig. 1 nur durch eine innerhalb der Verbindungsleitung 6 stückweise dicker dargestellte Strichpunktlinie angedeutete Schalteinrichtung 8 angeordnet ist. Die Verbindungsleitung 6 besitzt eine Länge I und einen Durchmesser d. Ein Restöffnungsquerschnitt der erfindungsgemäß vorgesehenen Schalteinrichtung 8 ist dabei mit dem Bezugszeichen $A_R$ bezeichnet. Mittels dieser Schalteinrichtung 8 kann das Zusatzvolumen 2 wahlweise mit dem Hauptvolumen 4 verbunden oder von diesem abgetrennt werden, um die effektive Federkennlinie in Abhängigkeit von den gewünschten Fahreigenschaften des Fahrzeugs zu verändern.

Die Verbindungsleitung 6 ist über einen geeigneten, nicht gesondert dargestellten Leitungsverbinder, insbesondere eine Steckverbindung, mit dem Haupt-Luftfedervolumen 4 luftdruckdicht verbindbar. Dies kann analog auch für die Verbindung der Verbindungsleitung 6 mit dem Zusatz-Luftfedervolumen 2 gelten. Die Schalteinrichtung 8 kann insbesondere am Eingang oder in der Mitte der Verbindungsleitung 6 angeordnet sein.

Das Haupt-Luftvolumen 4 ist von einem Federkolben 10 beaufschlagt, der sich entsprechend den Federungsbewegungen eines Rades in einem Zylinder 12 bewegt. Diese zeitabhängige Erregerbewegung ist in Fig. 1 mit $s_E$ (t) bezeichnet. Dadurch verändern sich das Volumen und der Druck p (t) innerhalb des Hauptvolumens 4 entsprechend zeitabhängig.

Bei geöffneter Schalteinrichtung 8 bewegt sich das Luftvolumen bzw. die Luftmasse $m_{Luft}$ innerhalb der Verbindungsleitung 6 mit einer Frequenz $\omega$ entsprechend einer eingangsseitigen Erregerfrequenz $\omega_0$ gegen das Volumen $V_{zv}$ bzw. den Druck $p_{zv}$ des Zusatzvolumens 2. Gemäß Fig. 2 wirkt somit die Luftmasse $m_{Luft}$ bei Bewegung $s_L$ (t) gegen die Federkonstante $c_{zv}$ des Zusatzvolumens 4. Mit anderen Worten - es schwingt die Luftmasse $m_{Luft}$ in der Leitung 6 auf der Luftfeder des Zusatzvolumens $V_{zv}$. Dabei kommt es durch das Auftreten eines zusätzlichen "Auspumpens" des Zusatz-Luftfedervolumens 2 zu einer Senkung der effektiven Federsteife im Gesamtsystem.

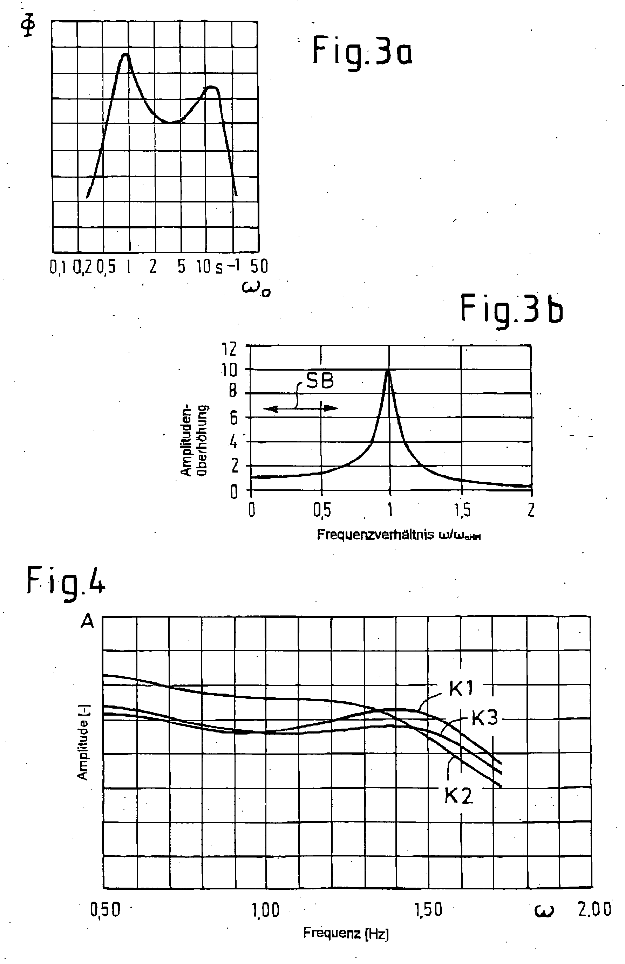

Fig. 3a veranschaulicht dazu eine praxistypische Beanspruchung eines Luftfedersystems mit dem erfindungsgemäßen Anbausatz 1. In dem dargestellten Diagramm ist als Maß für diese Beanspruchung die spektrale Leistungsdichte $\varphi$ der Beschleunigung, der ein Fahrzeugaufbau im Beanspruchungsfall ausgesetzt ist, über der Erregerfrequenz $\omega_0$ aufgetragen. Es ist erkennbar, daß die Beanspruchung zwei Maxima aufweist, eines im Bereich der Frequenz $\omega_0$ zwischen 0,5 und 1,0 $s^{-1}$ und ein zweites im Bereich zwischen 10,0 und 15,0 $s^{-1}$.

Erfindungsgemäß ist nun vorgesehen, daß bei geschlossener Schalteinrichtung 8, d.h. in Sperrstellung, die Luftmasse $m_{Luft}$ in der Verbindungsleitung 6 bei den auftretenden Erregerfrequenzen $\omega_0$ im Bereich von >0 bis 10 Hz eine gedämpfte Schwingung ausführt. Bei geschlossener Schalteinrichtung 8 wird dabei die in Fig. 2 dargestellte Dämpfungsgröße $k_{DR}$ wirksam, was in der Zeichnung im Sinne eines mechanischen Ersatzschaltbildes symbolisch durch eine mittels eines Schalters 8a parallel zur Feder mit der Konstante $c_{zv}$ zuschaltbare Kolben-Zylindereinheit 8b angedeutet ist. Der geschlossenen Schalteinrichtung 8 entspricht dabei der geschlossene Schalter 8a. Die Dämpfung wird durch die erfindungsgemäße Dimensionierung des Restöffnungsquerschnitts $A_R$ erreicht, bis auf den beim Schließen der Schalteinrichtung 8 der Querschnitt der Verbindungsleitung 6 reduziert wird.

Die Schwingung der Luftmasse $m_{Luft}$ erfolgt dabei erfindungsgemäß mit einer Frequenz w in einem in der Darstellung in Fig. 3b durch das Bezugszeichen SB angedeuteten Schwingungsbereich unterhalb der Helmholtz-Eigenfrequenz $\omega_{eHH}$ der Luftmasse $m_{Luft}$ in der Verbindungsleitung 6. Der Restöffnungsquerschnitt $A_R$ kann dabei insbesondere derart dimensioniert sein, daß die Luftmasse $m_{Luft}$ mit einer Frequenz w unterhalb des halben Wertes, vorzugsweise unterhalb eines Viertels des Wertes, besonders bevorzugt unterhalb eines Achtels des Wertes, ihrer Helmholtz-Eigenfrequenz $\omega_{eHH}$ schwingt. Für die Helmholtz-Eigenfrequenz $\omega_{eHH}$ gelten dabei die eingangs aufgeführten Formeln (1) bis (6). Der erfindungsgemäß vorzusehende Restöffnungsquerschnitt $A_R$ ist dabei sehr viel kleiner als ein Querschnitt, bei dem der Helmholtz-Effekt auftritt.

Bei den Frequenzen $\omega$ im Schwingungsbereich SB unterhalb der Eigenfrequenz $\omega_{eHH}$ tritt - wie dargestellt - keine oder nur eine geringe Amplitudenerhöhung der Schwingung auf Grund des Helmholtz-Effektes auf. Allerdings ist die in Fig. 3b dargestellte Abhängigkeit der Amplitudenüberhöhung vom Frequenzverhältnis $\omega/\omega_{eHH}$ charakteristisch für

die Öffnungsstellung der Schalteinrichtung 8, in der die Luftmasse $m_{Luft}$ eine ungedämpfte Schwingung ausführt. In der Sperrstellung wird der Wert der Amplitudenüberhöhung im Schwingungsbereich SB unterhalb der Helmholtz-Eigenfrequenz $\omega_{eHH}$ gegenüber dem dargestellten Kurvenverlauf noch durch die beschriebene Dämpfung reduziert. Hierzu wurde bereits ausgeführt, daß ein vorteilhafter Wert der Dämpfung in der Sperrstellung dabei dann vorliegt, wenn die sich unter der Wirkung der Erregergröße - im vorliegenden Fall der zeitabhängige Erregerbewegung $s_E$ (t) - einstellende Amplitude der Schwingung, deutlich unterhalb einer Amplitude liegt, wie sie sich bei Vorliegen der Öffnungsstellung der Schalteinrichtung 8 einstellen würde. Als eine solche deutlich kleinere Amplitude wird dabei eine Amplitude angesehen, die kleiner oder gleich dem Mittelwert aus einer Amplitude bei Vorhandensein einer Luftfeder mit Zusatzvolumen 2 und einer Amplitude bei Vorhandensein einer Luftfeder ohne Zusatzvolumen 2 ist. In der Sperrstellung kommt es zu einer im Vergleich mit der Öffnungsstellung auftretenden Druckerhöhung im Haupt-Federvolumen 4 und dadurch im gesamten Fahrzeug-Luftfedersystem zu einer Erhöhung der Federsteife.

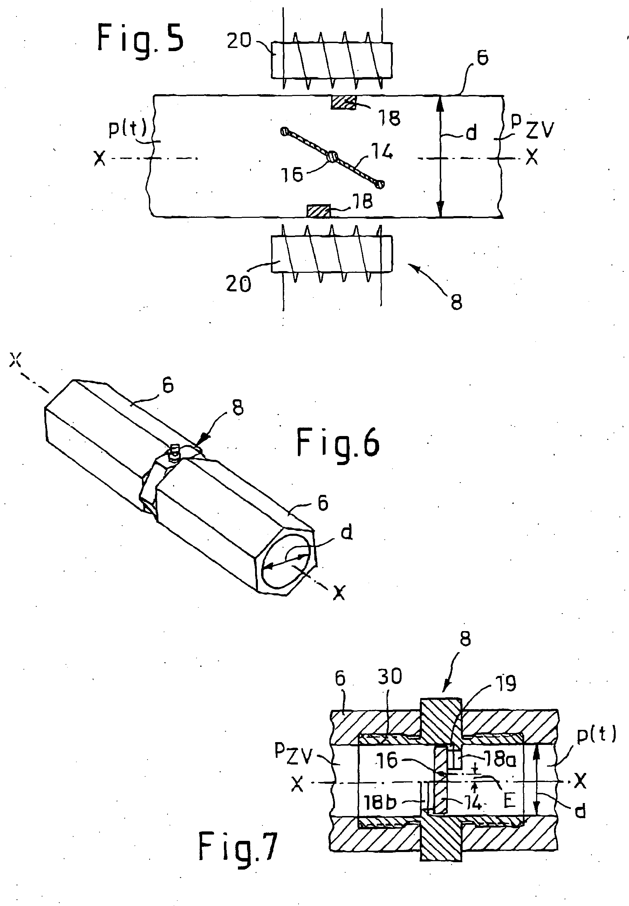

Die in Fig. 4 wiedergegebene diagrammatische Darstellung der Wirkung des mit einem erfindungsgemäßen Anbausatz 1 ausgestatteten Luftfedersystems veranschaulicht dies im Detail. Das Diagramm zeigt dabei im Frequenzbereich $\omega$ von etwa 0,5 bis 1,7 Hz drei Kurven K1, K2, K3 des Amplitudenverlaufs A der Schwingungen, beispielsweise von unter dem Einfluß von Lenkbewegungen auftretenden Kraftfahrzeug-Wankwinkeln. Als erfindungsgemäß bevorzugt wird es dabei angesehen, daß der Restöffnungsquerschnitt $A_R$ derart dimensioniert ist, daß die Luftmasse $m_{Luft}$ die gedämpfte Schwingung unter Anregung durch Erregerfrequenzen $\omega_0$ im Bereich von 0,1 bis 2,0 Hz ausführt.

Die Kurve K1 in Fig. 4 beschreibt das Schwingungsverhalten einer Luftfeder ohne Zusatzvolumen 2, die Kurve K2 das Schwingungsverhalten einer Luftfeder mit Zusatzvolumen 2 bei Vorliegen der Öffnungsstellung der Schalteinrichtung 8 und die Kurve K3 das Schwingungsverhalten einer Luftfeder mit Zusatzvolumen 2 bei Vorliegen der Sperrstellung der Schalteinrichtung 8 eines erfindungsgemäßen Anbausatzes 1.

Es ist zu erkennen, daß die Kurve K1 im unteren Frequenzbereich (<1 Hz) zu einer sehr geringen Amplitude A, jedoch nachteiligerweise auf Grund der erhöhten Federsteifigkeit bei etwa 1,4 Hz zu einem Amplitudenmaximum führt. Die Kurve K2 zeigt statt dessen - einer geringen Federsteife des Gesamtsystems entsprechend - kein solches Maximum, führt aber dafür in einem unteren Frequenzbereich (< etwa 1,3 Hz) zu einer vergleichsweise höheren Amplitude A als die Kurve K1. Des Weiteren ist ersichtlich, daß die Kurve K3 den insgesamt besten Verlauf zeigt, da sie nahezu im gesamten Frequenzbereich etwa die gleichen niedrigen Werte der Amplitude A wie die Kurve K1 - oder sogar niedrigere Werte als die Kurve K1 - und im unteren Bereich bis zu etwa 1,3 Hz auch niedrigere Werte als die Kurve K2 aufweist und im Frequenzbereich von etwa 1,5 Hz und höher nur zu geringfügig höheren Amplitudenwerten führt, als diese die Kurve 2 besitzt. Außerdem tritt kein ausgeprägtes Amplitudenmaximum auf, da die vorhandene, bessere Schwingungsdämpfung eine Resonanzerscheinung verhindert.

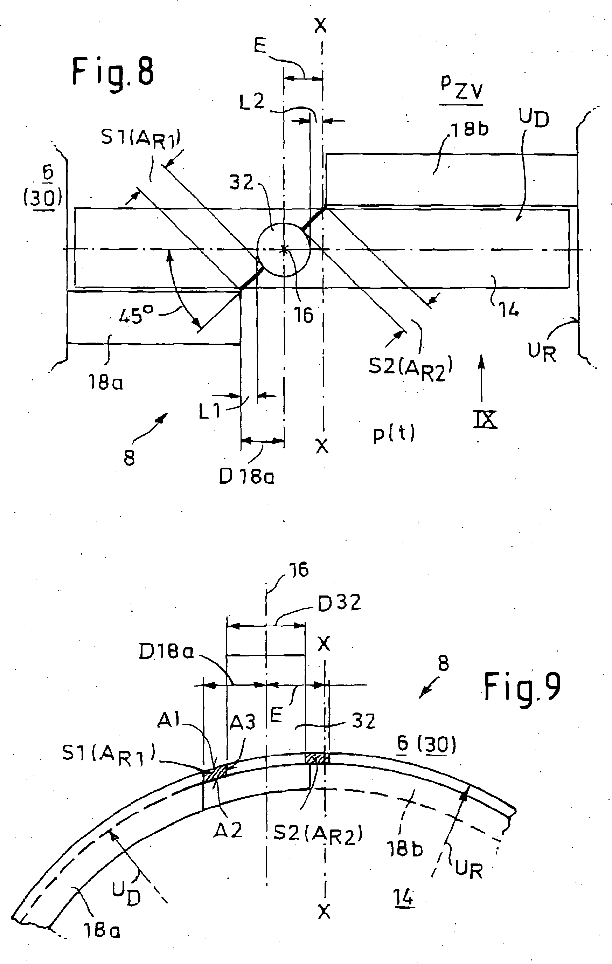

In einer ersten bevorzugten Ausführung, die in Fig. 5 dargestellt ist, ist die Schalteinrichtung 8 von einer in der Verbindungsleitung 6 angeordneten, scheibenförmigen Drosselklappe 14 gebildet, die um eine quer zur Verbindungsleitung 6 verlaufende Achse 16 derart drehbar gelagert ist, daß sie mit ihrer Scheibenfläche einerseits in der Öffnungsstellung in Längsrichtung der Verbindungsleitung 6 und andererseits in der Sperrstellung in Querrichtung ausgerichtet ist. Dabei kann der in der Sperrstellung vorgesehene, in Fig. 5 nicht dargestellte Restöffnungsquerschnitt $A_R$ durch einen Spalt oder mehrere am Umfang der Drosselklappe 14 angeordnete Spalte S1, S2 oder durch Durchgangsöffnungen in der Drosselklappe 14 gebildet sein. Diesbezüglich mögliche Einzelheiten zeigen dazu Fig. 8 und 9.

Durch eine reibungsarme Lagerung der Drosselklappe 14 ist es vorteilhafterweise möglich, die Drosselklappe 14 mechanisch verbindungs- und berührungslos durch mindestens ein Magnetfeld einer außerhalb der Verbindungsleitung 6 angeordneten Magnetanordnung 20 zu betätigen. Dazu kann die Drosselklappe 14 derart diametral magnetisiert sein, daß sie entsprechend dem innerhalb der Verbindungsleitung 6 vorliegenden Verlauf des Magnetfeldes der äußeren Magnetanordnung 20 nach der Art einer Kompaßnadel ausrichtbar ist.

Dabei kann mit Vorteil auch vorgesehen sein, daß die Drosselklappe 14 in der Sperrstellung an mindestens einem mechanischen Endanschlag - in der in Fig. 5 gezeigten Darstellung sind es zwei gleichartige Endanschläge 18 - innerhalb der Verbindungsleitung 6 zum Anschlag kommt.

Unter montagetechnischem Gesichtspunkt ist es von Vorteil, wenn - wie in der Ausführung der Erfindung gemäß Fig. 6 und 7 sowie Fig. 8 und 9 dargestellt - die Drosselklappe 14 über diametral angeordnete Achsenden (Bezugszeichen 32 in Fig. 8 und 9) innerhalb der Verbindungsleitung 6, insbesondere in (nicht dargestellten) Lageröffnungen, einer in die Verbindungsleitung 6 eingesetzten, vorzugsweise einschraubbaren Haltebuchse 30 drehbar gelagert ist. Hierbei kann - wie in Fig. 7 dargestellt, bevorzugt eine asymmetrische Anordnung der Achse 16 und eine asymmetrische Ausbildung der Anschläge 18a, 18b vorgesehen sein, durch die in vorteilhafter Weise erreicht werden kann, daß die Drosselklappe 14 im Betriebszustand nicht flattert, insbesondere, daß die Drosselklappe 14 bei Vorliegen der Sperrstellung durch die Druckdifferenz p(t) - $p_{zv}$ zwischen dem Hauptvolumen 4 und dem Zusatzvolumen 2 nicht aufgedrückt werden kann. Diese Asymmetrie ist in Fig. 7, 8 und 9 durch die Exzentrizität E der Drehachse 16 gegenüber der Achse X-X der Rohrleitung 6 veranschaulicht.

Vorteilhaft ist es auch, wie in Fig. 7 gezeigt, eine, insbesondere in Anpassung an die Form der Anschläge 18a, 18b segmentierte, Weichdichtung 19 einzusetzen, durch die das Anschlagen der Drosselklappe 14 in ihrer Sperrstellung an dem Anschlag 18 bzw. den Anschlägen 18a, 18b gedämpft werden kann.

In der in verschiedenen Ansichten in Fig. 8 und 9 gezeigten Ausführung der Schalteinrichtung 8 ist der Restöffnungsquerschnitt $A_R$ in der Sperrstellung durch mehrere am Umfang $U_D$ der Drosselklappe 14 angeordnete Spalte - dargestellt sind zwei Spalte S1, S2 - gebildet. Diese Spalte S1, S2 bilden jeweils Teilflächen $A_{R1}$, $A_{R2}$, aus denen sich der Restöffnungsquerschnitt $A_R$ summarisch zusammensetzt. Dadurch wird bei den sich ausbildenden Schwingungen eine gleichmäßige Beanspruchung der Luftmasse $m_{Luft}$ und damit ein ausgezeichnetes dynamisches Verhalten erreicht. Die Spalte S1 stehen dabei in der gezeigten Ausführung in einem Winkel von 45° zur Achsrichtung X-X.

Aus Fig. 9 wird deutlich, daß der Restöffnungsquerschnitt $A_R$ in der Sperrstellung - bzw. jede Teilflächen $A_{R1}$, $A_{R2}$ desselben - in radialer Richtung einerseits durch einen Abschnitt A1 des Innenumfangs $U_R$ der Wandung der Verbindungsleitung 6 oder insbesondere durch einen solchen Abschnitt A1 des Innenumfangs $U_R$ der in der in die Verbindungsleitung 6 eingesetzten Haltebuchse 30 und andererseits durch einen Abschnitt A2 des Außenumfangs $U_D$ der Drosselklappe 14 gebildet sein kann. Seitlich kann - wie dargestellt - der Restöffnungsquerschnitt $A_R$ in der Sperrstellung - bzw. jede Teilflächen $A_{R1}$, $A_{R2}$ desselben einerseits durch einen jeweiligen Endanschlag 18a, 18b und andererseits durch einen Abschnitt A3 des Außenumfangs der der Lagerung der Drosselklappe 14 dienenden Achsenden 32 gebildet sein.

Die entsprechenden Abmaße, wie die absoluten Längen der Spalte S1, S2 bzw. deren auf den Querschnitt projizierten effektiven Anströmabmaße L1, L2, die sich durch die Abstände der Anschläge 18a, 18b - z.B. den in Fig. 8 und 9 mit dem Bezugszeichen D18a bezeichneten Abstand - vom Durchmesser D32 der Achsenden 32 der Drosselklappe 14 ergeben, sind im Hinblick auf den daraus resultierenden Restöffnungsquerschnitt $A_R$ nach den oben erläuterten Kriterien bemessen.

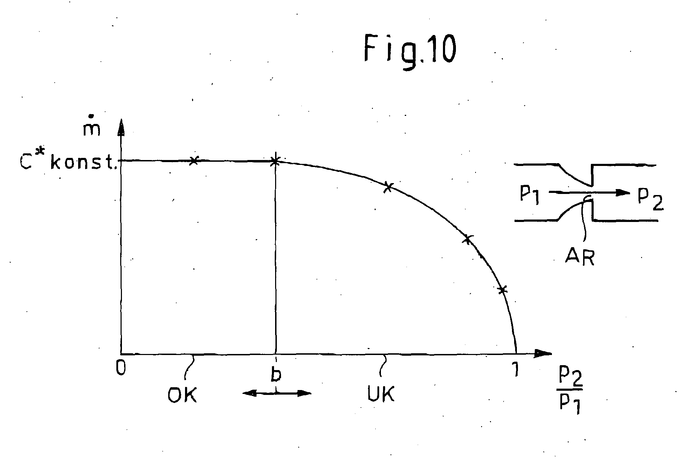

Neben diesen geometrischen Größen sind auch wegen ihrer universelleren Bedeutung, d.h. beispielsweise wegen ihrer weitestgehenden Unabhängigkeit vom Druck und vom Durchmesser der Verbindungsleitung 6, weitere Größen zur Kennzeichnung des erfindungsgemäßen Restquerschnitts $A_R$ geeignet. So veranschaulicht Fig. 10 die parametrische Beschreibung von pneumatischen Widerständen, wie sie in dem erfindungsgemäßen Anbausatz 1 die Schalteinrichtung 8 darstellt. Als Parameter zur Beschreibung dienen darin das kritische Druckverhältnis b und der pneumatische Leitwert $C^-$, deren Definitionen und praktische Ermittlung in der Norm ISO 6358 festgelegt sind. Das kritische Druckverhältnis b bezeichnet dabei - wie bereits erwähnt - das Verhältnis von Auslaßdruck $p_2$ zu Einlaßdruck $p_1$, bei dem im engsten Querschnitt, im erfindungsgemäßen Fall im Restöffnungsquerschnitt $A_R$ der Schalteinrichtung 8, gerade Schallgeschwindigkeit erreicht wird. Der Leitwert $C^-$ ist ein Maß für den auf den technischen Normzustand der Luft bezogenen, in der zeichnerischen Darstellung auf der Ordinatenachse markierten überkritischen Durchfluß m, der keine Abhängigkeit mehr vom Verhältnis b Auslaß- zu Einlaßdruck aufweist. In der Praxis können dabei das kritische Druckverhältnis b und der pneumatische Leitwert $C^-$ dadurch ermittelt werden, daß entweder bei konstantem Auslaßdruck $p_2$ der Einlaßdruck $p_1$ abgesenkt oder bei konstantem Einlaßdruck $p_1$ der Auslaßdruck $p_2$ erhöht wird, bis durch eine Konstanz des durchgesetzten Massenstromes m der Übergang vom unterkritischen Bereich UK zum überkritischen Bereich OK angezeigt wird. Die dabei vorliegenden Werte des Druckverhältnisses und des Massenstromes m stellen dann auf den Normzustand bezogen das kritische Druckverhältnis b und der pneumatische Leitwert $C^-$ dar. Es wurde gefunden, daß der in der Sperrstellung bei Vorliegen des Restöffnungsquerschnitts $A_R$ gebildete pneumatische Widerstand der Schalteinrichtung 8 des erfindungsgemäßen Anbausatzes 2 insbesondere dann als optimal zu betrachten ist, wenn er ein kritisches Druckverhältnis b im Bereich von 0,2 bis 0,45 und einen pneumatischen Leitwert C' im Bereich von > 1 bis < 77 Normliter je Minute und Bar aufweist.

Die Erfindung ist nicht auf die dargestellten Ausführungsbeispiele beschränkt, sondern umfaßt auch alle im Sinne der Erfindung gleichwirkenden Ausführungen. So ist es z.B. möglich, die erfindungsgemäße Schalteinrichtung 8 anders als in den dargestellten Formen auszuführen oder - wie bereits erwähnt - den Restquerschnitt $A_R$ an anderer Stelle als in den dargestellten Ausführungen, beispielsweise als Lochblende in einer Klappe oder dergleichen, auszubilden oder mechanische Stelleinrichtungen, wie eine Feder, zur Betätigung der Schalteinrichtung 8 vorzusehen.

Ferner ist die Erfindung bislang auch noch nicht auf die in den unabhängigen Ansprüchen definierten Merkmalskombinationen beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

**Bezugszeichen**

1    Anbausatz
2    Zusatz-Luftfedervolumen

| 4 | Haupt-Luftfedervolumen |
|---|---|
| 6 | Verbindungsleitung zwischen 2 und 4 |
| 8 | Schalteinrichtung in 6 |
| 8a | Schalter von 8 (Ersatzschaltbild) |
| 8b | Kolben-Zylinder-Einheit von 8 (Ersatzschaltbild) |
| 10 | Federkolben von 4 |
| 12 | Zylinder von 4 |
| 14 | Drosselklappe |
| 16 | Achse der Lagerung von 14 |
| 18 | Endanschlag für 14 |
| 18a | Endanschlag für 14 |
| 18b | Endanschlag für 14 |
| 19 | Weichdichtung |
| 20 | Magnetanordnung zur Betätigung von 8 |
| 30 | Haltebuchse für 14 |
| 32 | Achsenden von 14 |

| A | Amplitude, z.B. von $s_L(t)$ |
|---|---|
| A1 | Abschnitt von $U_R$ |
| A2 | Abschnitt von $U_D$ |
| A3 | Abschnitt des Außenumfangs von 32 |
| $A_L$ | Querschnitt von 6 |
| $A_R$ | Restquerschnitt von 8 in Sperrstellung |
| $A_{R1}$ | Teilfläche von $A_R$ in S1 |
| $A_{R2}$ | Teilfläche von $A_R$ in S2 |
| b | kritisches Druckverhältnis (von 8) |
| C' | pneumatischer Leitwert (von 8) |
| $C_{ZV}$ | Federkonstante von 2 |
| d | Durchmesser von 6 |

| D18a | Abstand zwischen 18a, 18b und D32 |
|---|---|
| D32 | Durchmesser von 32 |
| E | Lagerexzentrizität von 16 gegenüber X-X |
| K1 | Kurvenverlauf A ($\omega_0$), ohne 2 |
| K2 | Kurvenverlauf A (wo), mit 2, 8 in Öffnungsstellung |
| K3 | Kurvenverlauf A ($\omega_0$), mit 2, 8 in Sperrstellung |
| $k_{DR}$ | Dämpfungsgröße von 8 |
| I | Länge von 6 |
| L1 | Anströmabmaß von S1 |
| L2 | Anströmabmaß von S2 |
| $m_{Luft}$ | Luftmasse in 6 |
| m | Massenstrom bei der Ermittlung von b und C⁻ |
| n | Polytropenexponent |
| OK | überkritischer Bereich von b |
| p(t) | Druck in 4 |
| $p_1$ | Einlaßdruck, pneumatischer Widerstand bzw. 8 |
| $p_2$ | Auslaßdruck, pneumatischer Widerstand bzw. 8 |
| $p_{ZV}$ | Druck in 2 |
| $R_{Luft}$ | Gaskonstante der Luft in 6 |
| S1, S2 | Spalte zur Bildung von $A_R$ |
| SB | Schwingungsbereich von w |
| $s_E(t)$ | Erregerbewegung |
| $s_L(t)$ | Bewegung der Luftmasse in 6 |
| T | Temperatur in K |
| $U_D$ | Außenumfang von 14 |
| $U_R$ | Innenumfang von 6 bzw. 30 |
| UK | unterkritischer Bereich von b |
| $V_{zv}$ | Volumen von 2 |

X-X       Längsachse von 6, 30

$\varphi$       spektrale Leistungsdichte der Beanspruchung von 4

$p_{Luft}$   Dichte der Luft

$\omega$      Schwingungsfrequenz von $m_{Luft}$ in 6

$\omega_0$    Erregerfrequenz

$\omega_{eHH}$   Helmholtz-Eigenfrequenz

**Patentansprüche**

1. Anbausatz (1) für ein Fahrzeug-Luftfedersystem, bestehend aus einem Zusatz-Luftfedervolumen (2) mit einer an ein Fahrzeug-Haupt-Luftfedervolumen (4) anschließbaren eine Luftmasse ($m_{Luft}$) enthaltenden Verbindungsleitung (6) und einer Schalteinrichtung (8) zum wahlweisen Zu- oder Abschalten des Zusatz-Luftfedervolumens (2), wobei die Schalteinrichtung (8) im Bereich der Verbindungsleitung (6) derart angeordnet und ausgebildet ist, daß sie den Querschnitt ($A_L$) der Verbindungsleitung (6) einerseits in einer Öffnungsstellung nahezu vollständig für eine Durchströmung in beiden Richtungen freigibt und andererseits in einer Sperrstellung bis auf einen bestimmten Restöffnungsquerschnitt ($A_R$) reduziert,
**dadurch gekennzeichnet , daß** der Restöffnungsquerschnitt ($A_R$) derart dimensioniert ist, daß die Luftmasse ($m_{Luft}$) in der Verbindungsleitung (6) bei auftretenden Erregertrequenzen (wo) im Bereich von >0 bis 10 Hz eine gedämpfte Schwingung unterhalb ihrer Helmholtz-Eigenfrequenz ($\omega_{eHH}$) ausführt.

2. Anbausatz nach Anspruch 1,
**dadurch gekennzeichnet , daß** der Restöffnungsquerschnitt ($A_R$) derart dimensioniert ist, daß die Luftmasse ($m_{Luft}$) mit einer Frequenz ($\omega$) unterhalb des halben Wertes, vorzugsweise unterhalb eines Viertels des Wertes, besonders bevorzugt unterhalb eines Achtels des Wertes, ihrer Helmholtz-Eigenfrequenz ($\omega_{eHH}$) schwingt.

3. Anbausatz nach Anspruch 1 oder 2,
**dadurch gekennzeichnet , daß** der Restöffnungsquerschnitt ($A_R$) derart dimensioniert ist, daß die Luftmasse ($m_{Luft}$) die gedämpfte Schwingung unter Anregung durch Erregerfrequenzen ($\omega_0$) im Bereich von 0,1 bis 2,0 Hz ausführt.

4. Anbausatz nach einem der Ansprüche 1 bis 3,
**dadurch gekennzeichnet , daß** die Schalteinrichtung (8) von einer in der Verbindungsleitung (6) angeordneten, scheibenförmigen Drosselklappe (14) gebildet ist, die um eine quer zur Verbindungsleitung (6) verlaufende Achse (16) derart drehbar gelagert ist, daß sie mit ihrer Scheibenfläche in der Öffnungsstellung in Längsrichtung (X-X) der Verbindungsleitung (6) und in der Sperrstellung in Querrichtung ausgerichtet ist.

5. Anbausatz nach Anspruch 4,
**dadurch gekennzeichnet , daß** die Drosselklappe (14) mechanisch verbindungs- und berührungslos durch mindestens ein Magnetfeld einer außerhalb der Verbindungsleitung (6) angeordneten Magnetanordnung (20) betätigbar ist.

6. Anbausatz nach Anspruch 4 oder 5,
**dadurch gekennzeichnet, daß** die Drosselklappe (14) über diametrale Achsenden (32) innerhalb der Verbindungsleitung (6), insbesondere in Lageröffnungen einer in die Verbindungsleitung (6) eingesetzten Haltebuchse (30), drehbar gelagert ist.

7. Anbausatz nach einem der Ansprüche 4 bis 6, insbesondere nach Anspruch 6,
**dadurch gekennzeichnet, daß** die Drosselklappe (14) in der Sperrstellung an mindestens einem mechanischen Endanschlag (18, 18a, 18b) innerhalb der Verbindungsleitung (6), insbesondere in der in die Verbindungsleitung (6) eingesetzten Haltebuchse (30), zum Anschlag kommt.

8. Anbausatz nach einem der Ansprüche 4 bis 7,
**dadurch gekennzeichnet, daß** der Restöffnungsquerschnitt ($A_R$) in der Sperrstellung durch einen Spalt (S1, S2) oder mehrere am Umfang ($U_D$) der Drosselklappe (14) angeordnete Spalte (S1, S2) oder durch Durchgangsöffnungen in der Drosselklappe (14) gebildet ist.

9. Anbausatz nach Anspruch 6 und Anspruch 7 oder 8,

**dadurch gekennzeichnet, daß** der Restöffnungsquerschnitt (A$_R$) in der Sperrstellung in radialer Richtung einerseits durch einen Abschnitt (A1) des Innenumfangs (U$_R$) der Wandung der Verbindungsleitung (6) oder insbesondere durch einen Abschnitt (A1) des Innenumfangs (U$_R$) der in der in die Verbindungsleitung (6) eingesetzten Haltebuchse (30) und andererseits durch einen Abschnitt (A2) des Außenumfangs (U$_D$) der Drosselklappe (14) und seitlich einerseits durch einen Endanschlag (18, 18a, 18b) und andererseits durch einen Abschnitt (A3) des Außenumfangs der der Lagerung der Drosselklappe (14) dienenden Achsenden (32) gebildet ist.

10. Anbausatz nach einem der Ansprüche 1 bis 9,
    **dadurch gekennzeichnet , daß** ein in der Sperrstellung bei Vorliegen des Restöffnungsquerschnitts (A$_R$) gebildete pneumatische Widerstand der Schalteinrichtung (8) ein kritisches Druckverhältnis (b) im Bereich von 0,2 bis 0,45 und einen pneumatischen Leitwert (C$^-$) im Bereich von > 1 bis < 77 Normliter je Minute und Bar aufweist.

11. Anbausatz nach einem der Ansprüche 1 bis 10,
    **dadurch gekennzeichnet, daß** die Schalteinrichtung (8) am Eingang oder etwa in der Mitte der Verbindungsleitung (6) angeordnet ist.

12. Schalteinrichtung für einen Anbausatz nach einem der Ansprüche 1 bis 11,
    **gekennzeichnet durch** eines der Merkmale des Kennzeichens der Ansprüche 1 bis 11.

13. Schalteinrichtung nach Anspruch 12,
    **dadurch gekennzeichnet, daß** die Schalteinrichtung (8) eine aus einem Überströmventil und einem Drosselorgan gebildete bauliche Einheit ist.

14. Verfahren zur Steuerung eines Fahrzeug-Luftfedersystems, bestehend aus einem Fahrzeug-Haupt-Luftfedervolumen (4) und einem Zusatz-Luftfedervolumen (2) sowie einer das Fahrzeug-Haupt-Luftfedervolumen (4) und das Zusatz-Luftfedervolumen (2) verbindenden, eine Luftmasse (m$_{Luft}$) enthaltenden Verbindungsleitung (6) und einer Schalteinrichtung (8), mittels derer das Zusalz-Luftfedervolumen (2) wahlweise zu- oder abgeschaltet wird, wobei die Schalteinrichtung (8) den Querschnitt (A$_L$) der Verbindungsleitung (6) einerseits in einer Öffnungsstellung nahezu vollständig für eine Durchströmung in beiden Richtungen freigibt und andererseits in einer Sperrstellung bis auf einen bestimmten Restöffnungsquerschnitt (A$_R$) reduziert,
    **dadurch gekennzeichnet , daß** in der Sperrstellung der Restöffnungsquerschnitt (A$_R$) derart eingestellt wird, daß die Luftmasse (m$_{Luft}$) in der Verbindungsleitung (6) bei auftretenden Erregerfrequenzen (ω$_0$) im Bereich von >0 bis 10 Hz eine gedämpfte Schwingung unterhalb ihrer Helmholtz-Eigenfrequenz (ω$_{eHH}$) ausführt.

15. Verfahren nach Anspruch 14,
    **dadurch gekennzeichnet , daß** in der Sperrstellung der Restöffnungsquerschnitt (A$_R$) derart eingestellt wird, daß die Luftmasse (m$_{Luft}$) mit einer Frequenz (ω) unterhalb des halben Wertes, vorzugsweise unterhalb eines Viertels des Wertes, besonders bevorzugt unterhalb eines Achtels des Wertes, ihrer Helmholtz-Eigenfrequenz (ω$_{eHH}$) schwingt.

16. Verfahren nach Anspruch 14 oder 15,
    **dadurch gekennzeichnet , daß** die Luftmasse (m$_{Luft}$) die gedämpfte Schwingung unter Anregung durch Erregerfrequenzen (ω$_0$) im Bereich von 0,1 bis 2,0 Hz ausführt.

17. Verfahren nach einem der Ansprüche 14 bis 16,
    **dadurch gekennzeichnet, daß** ein in der Sperrstellung bei Vorliegen des Restöffnungsquerschnitts (A$_R$) gebildeter pneumatische Widerstand der Schalteinrichtung (8) ein kritisches Druckverhältnis (b) im Bereich von 0,2 bis 0,45 und einen pneumatischen Leitwert (C$^-$) im Bereich von > 1 bis < 77 Normliter je Minute und Bar aufweist.

Fig.1

Fig.2

## Fig.3a

Φ

0,1 0,2 0,5 1  2   5  10 s⁻¹ 50

$\omega_o$

## Fig.3b

Amplituden-überhöhung

12
10
8
6
4
2
0

SB

0        0,5        1        1,5        2

Frequenzverhältnis $\omega/\omega_{eHM}$

## Fig.4

A

Amplitude [-]

K1
K3
K2

0,50          1,00          1,50        $\omega$   2,00

Frequenz [Hz]

# Fig.5

$p(t)$

X ——————— X

20

18

$d$

$P_{ZV}$

16

14

18

20

8

# Fig.6

X

6

8

6

$d$

X

# Fig.7

8

6    30    19

$P_{ZV}$

16    18a

X ——————— X

18b    14    E    $d$

$p(t)$

Fig.8

Fig.9

# Fig.10

**Europäisches Patentamt**

# EUROPÄISCHER RECHERCHENBERICHT

Nummer der Anmeldung

EP 05 02 3452

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,A | EP 1 457 722 A (VOSS AUTOMOTIVE GMBH) 15. September 2004 (2004-09-15) * Anspruch 1; Abbildungen 1-22 * ----- | 1-17 | B60G11/30 B60G17/04 B60G17/052 F16F9/04 F16K31/06 |
| A | PATENT ABSTRACTS OF JAPAN Bd. 014, Nr. 300 (M-0991), 28. Juni 1990 (1990-06-28) -& JP 02 095919 A (NISSAN MOTOR CO LTD), 6. April 1990 (1990-04-06) * Zusammenfassung; Abbildungen 1-8 * ----- | 1-17 | |
| A | GB 2 294 667 A (* PACCAR INC) 8. Mai 1996 (1996-05-08) * Anspruch 1; Abbildungen 1-8 * ----- | 1-17 | |
| P,A | US 2005/097880 A1 (JANSEN HARVEY B) 12. Mai 2005 (2005-05-12) * Zusammenfassung; Abbildungen 1-10 * * Absatz [0036] * ----- | 1-17 | |
| A | US 2003/173723 A1 (BEHMENBURG CHRISTOF ET AL) 18. September 2003 (2003-09-18) * Zusammenfassung; Abbildungen 1-7 * ----- | 1-17 | RECHERCHIERTE SACHGEBIETE (IPC) B60G F16F F16K |

Der vorliegende Recherchenbericht wurde für alle Patentansprüche erstellt

| Recherchenort | Abschlußdatum der Recherche | Prüfer |
|---|---|---|
| München | 20. Februar 2006 | Bolte, U |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 02 3452

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 1457722 | A | 15-09-2004 | DE | 20302274 U1 | 24-06-2004 |
| | | | US | 2004251584 A1 | 16-12-2004 |
| JP 02095919 | A | 06-04-1990 | KEINE | | |
| GB 2294667 | A | 08-05-1996 | KEINE | | |
| US 2005097880 | A1 | 12-05-2005 | KEINE | | |
| US 2003173723 | A1 | 18-09-2003 | CZ | 20030637 A3 | 18-02-2004 |
| | | | EP | 1344957 A1 | 17-09-2003 |
| | | | JP | 2003307250 A | 31-10-2003 |
| | | | SK | 2672003 A3 | 07-10-2003 |

EPO FORM P0461

Für nähere Einzelheiten zu diesem Anhang : siehe Amtsblatt des Europäischen Patentamts, Nr.12/82